(19) Europäisches Patentamt
European Patent Office
Office européen des brevets

(11) Numéro de publication: **0 235 052**
**B1**

(12) **FASCICULE DE BREVET EUROPEEN**

(45) Date de publication du fascicule du brevet: **23.05.90**

(51) Int. Cl.$^5$: **C 08 J 9/08,** C 08 J 9/02

(21) Numéro de dépôt: **87420018.1**

(22) Date de dépôt: **19.01.87**

(54) **Agent porophore pour composition organopolysiloxane transformable en mousse.**

(30) Priorité: **21.01.86 FR 8600977**

(43) Date de publication de la demande:
**02.09.87 Bulletin 87/36**

(45) Mention de la délivrance du brevet:
**23.05.90 Bulletin 90/21**

(84) Etats contractants désignés:
**AT BE CH DE ES FR GB GR IT LI LU NL SE**

(56) Documents cités:
**DE-A-2 030 653**
**GB-A-2 153 362**
**US-A-2 628 945**

(73) Titulaire: **RHONE-POULENC CHIMIE**
**25, quai Paul Doumer**
**F-92408 Courbevoie Cédex (FR)**

(72) Inventeur: **Millet, Claude**
**14, rue Jean de la Bruyère**
**F-69800 Saint-Priest (FR)**
Inventeur: **Rostaing, Paul**
**Les Charavelles - Bâtiment Jonquille**
**F-38200 Vienne (FR)**

(74) Mandataire: **Seugnet, Jean Louis et al**
**RHONE-POULENC INTERSERVICES Service Brevets Chimie Centre de Recherches de Saint-Fons B.P. 62**
**F-69192 Saint-Fons Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 235 052 B1

**Description**

La présente invention concerne un agent porophore pour composition organopolysiloxane du type SiH/Sivinyle catalysée au platine, transformable en mousse à température ambiante ou à température plus élevée pour produire une mousse isolante.

Les mousses silicones sont préparées la plupart du temps suivant l'une des trois méthodes suivantes:

1°) on ajoute un agent porophore c'est à dire un additif qui engendre un gaz, souvent de l'azote, par chauffage:

— une telle méthode est notamment décrite dans les brevets américains US—A—3.425.967, US—A—3.429.838, US—A—3.677.981, et US—A—4.189.545. De tels agents porophore sont par exemple:

l'azo-bis(isobutylronitrile),
la dinitropentaméthylènetétramine,
le téréphtalalazide,
l'azodicarbonamide et
l'eau,

2°) on incorpore à pression atmosphérique un gaz dans la composition organopolysiloxane lors du mélange des composants de la composition, on gellifie ce mélange sous vide, puis on réticule la silicone (brevet américain US—A—4.368.279),

3°) on génère in situ un gaz, généralement de l'hydrogène lors du mélange de la composition. Le dégagement d'hydrogène est assuré par la réaction d'un organohydrogénosiloxane avec un groupement hydroxyle. Les compositions contiennent alors généralement des groupements silanols et/ou des alcools. De telles compositions sont décrites en particulier dans les brevets américains US—A—3.070.555, US—A—3.338.847 et US—A—3.923.705. Toutefois la présence de fonctions hydroxyles (silanol, alcool) n'est pas nécessaire, ces fonctions pouvant être formées in situ par réaction de l'eau sur des organo-hydrogénosilanes (US—A—3.516.951).

— La première méthode présente l'inconvénient de nécessiter un chauffage généralement à une température assez élevée (supérieure généralement à 180°C) en vue d'obtenir des résultats satisfaisants.

— La deuxième méthode nécessite un appareillage de mise sous vide et n'est par conséquent utilisable à l'échelon industriel que pour la fabrication d'objets d'encombrement limité et suivant un procédé séquencé.

— La troisième méthode, qui est la plus utilisée, engendre de l'hydrogène qui n'est pas sans présenter un certain risque lors du passage dans les fours pour assurer la réticulation.

Un but de la présente invention est de proposer un agent porophore pour composition organopolysiloxane du type SiH/Si vinyle catalysée au platine qui ne présente pas les inconvénients de ceux utilisés dans l'art antérieur ou sous forme très atténuée.

Un autre but de la présente invention est de proposer un agent porophore bon marché, facilement incorporable dans les compositions silicones, efficace, stable au stockage, conférant aux compositions une "durée en pot" suffisante avant emploi et pouvant être adapté pour former des gaz dès la température ambiante ou par chauffage.

Dans ce qui suit, sauf mentions contraires, les pourcentages et parties sont en poids.

Ces buts et d'autres sont atteints par la présente invention qui concerne en effet une composition organopolysiloxane transformable en mousse caractérisée en ce qu'elle comporte:

A) 100 parties d'au moins une huile diorganopolysiloxane bloquée à chaque extrémité de sa chaîne par un motif vinyldiorganosiloxy dont les radicaux organiques liés aux atomes de silicium sont choisis parmi les radicaux méthyle, éthyle, n-propyle, vinyle, phényle et trifluoro-3,3,3 propyle, de viscosité de 100 à 300 000 mPa.s à 25°C.

B) au moins un organohydrogénopolysiloxane choisi parmi les homopolymères et les copolymères huileux et résineux liquides, présentant au moins trois groupes SiH par molécule et un seul atome d'hydrogène relié à un même atome de silicium, les radicaux organiques liés aux atomes de silicium étant choisis parmi les radicaux méthyle, éthyle, n-propyle, phényle et trifluoro-3,3,3 propyle, les produits B étant utilisés en quantité telle que le rapport molaire SiH/Sivinyle soit compris entre 0,8 et 8 de préférence entre 1,1 et 4.

C) Une quantité catalytiquement efficace d'un catalyseur au platine.

D) 0 à 200 parties d'une charge minérale et/ou métallique de préférence 30 à 80 parties.

E) une quantité d'additif porophore efficace pour engendrer des pores qui est un mélange de carbonate de calcium et d'au moins un acide organique carboxylique.

On utilisé généralement de 1 à 70 parties d'acide carboxylique, de préférence de 5 à 30 parties, pour 100 parties de carbonate ce calcium. Le carbonate de calcium utiisable dans la présente invention est un carbonate naturel broyé ou de précipitation éventuellement traité, utilisé habituellement comme charge dans les élastomères silicones. La granulométrie est de préférence comprise entre 0,05 et 10 µm. Les acides organiques carboxyliques plus particulièrement utilisables sont les acides mono ou polycarboxyliques à chaîne hydrocarbonée en $C_1$—$C_{25}$ linéaire ou ramifiée, saturée ou à insaturation alcényle ou alcynyle. Parmi ces acides conviennent particulièrement: l'acide formique, acétique, propionique, butyrique, isobutyrique, valérique, isovalérique, pivalique, laurique, myristique, palmitique et stéarique, l'acide oxalique, malonique, succinique, glutarique, adipique, pimélique, subérique, azélaïque et

sébacique; l'acide acrylique, propiolique (CH≡C—COOH), méthacrylique, crotonique, isocrotonique, oléique et maléique; l'acide fumarique, citraconique, mésaconique. On peut également utiliser les acides carboxyliques carbocycliques ayant au maximum 25 atomes de carbone tels que l'acide camphorique, benzoïque, phtalique, isophtalique, téréphtalique, naphoïque-2, o-toluique, atropique et cinnamique.

On peut également utiliser les acides versatiques (R) qui sont des mélanges d'acides monocarboxyliques tertiaires saturés ayant au total le même nombre d'atomes de carbone généralement compris entre 8 et 12. Bien entendu la présente invention englobe les précurseurs de ces acides engendrant lesdits acides lors de la fabrication de la composition; par exemple par chauffage lors de la réticulation. Dans le cas où l'acide carboxylique utilisé réagit dès la température ambiante sur le carbonate de sodium on effectue préalablement une dispersion de l'acide dans une huile silicone non réactive vis à vis dudit acide, ce qui permet d'inhiber à température ambiante la réaction de l'acide sur le carbonate. Cette huile silicone peut être choisie par exemple parmi une huile A) de viscosité comprise entre 10 et 4000 m.Pa.s à 25°C et une huile non réactive de viscosité comprise entre 10 et 4000 m.Pa.s qui est de préférence une huile diméthypolysiloxane bloquée à chacune des ces extremités par un groupe triméthylsiloxy et qui peut être également un polymère ou un copolymère sensiblement linéaire diorganopolysiloxane dont les radicaux organiques sont choisis parmi les radicaux méthyle, éthyle, phényle et trifluoro-3,3,3 propyle, au moins 70% molaire de ces radicaux étant des radicaux méthyle, au plus 15% molaire étant des radicaux phényle. Dans le cas où l'acide carboxylique utilisé est liquide à température ambiante, il suffit de mélanger l'huile et l'acide dans un mélangeur muni d'un système d'agitation quelconque en chauffant éventuellement l'huile silicone. Dans le cas où l'acide carboxylique est solide on peut chauffer l'huile silicone à une température supérieure au point de fusion de l'acide ou dissoudre l'acide dans un solvant organique compatible avec les silicones. On incorpore ensuite le carbonate de calcium de préférence toujours sous agitation, dans la dispersion suivi de préférence d'un broyage de l'ensemble. On obtient ainsi un empâtage de l'additif porophore dans une huile silicone, généralement de 0,4 à 5 parties d'huile pour 1 partie d'additif porophore. On utilise généralement 0,5 à 50 parties d'empâtage pour 100 parties de composition de silicone transformable en mousse de préférence de 2 à 20 parties.

Sans vouloir limiter l'invention à une théorie scientifique, on expliquerait la formation de mousse par l'agent porophore de la façon suivante.

Avec certains des acides carboxyliques comme par exemple l'acide oleïque et stéarique le carbonate de calcium ne réagit pas à froid mais réagit à chaud. Avec d'autres acides carboxyliques comme par exemple, l'acide acétique, le carbonate de calcium peut réagir à froid. Dans les deux cas, conformément à la présente invention, on peut éviter cette réaction en dispersant le carbonate de calcium dans une huile silicone comme décrit ci-dessus dans tous les cas. Cette inhibition disparaît à chaud, après mélange des composants de la composition organopolysiloxane, à une température supérieure à 100°C, de préférence supérieure à 140°C et la réaction du carbonate sur l'acide engendre notamment du gaz carbonique qui participe à l'élaboration des pores et de l'eau. Cette eau réagit à son tour sur les SiH du polyorganosiloxane B) avec dégagement d'hydrogène et formation de silanols, ces derniers réagissant sur les SiH pour donner les enchaînements siloxanes et dégagement d'hydrogène. Ce dégagement d'hydrogène participe à la formation des pores mais il est moins dangereux que celui obtenu lors de la mise en oeuvre de la méthode 3) de l'art antérieur cité ci-dessus, car il est très fortement dilué par le gaz carbonique inerte vis à vis de l'hydrogène. L'agent porophore selon l'invention apparaît donc comme une combinaison originale des méthodes 1) et 3) de l'art antèrieur, et aboutit à la formation de pores de taille sensiblement identique, modulable et pouvant être très fine (0,1 mm et moins) ou relativement importante (0,5 mm et plus).

En plus du carbonate on peut utiliser une autre charge minérale et/ou organique. Elle peut être choisie dans le groupe:

— des charges renforçantes telles que la silice de combustion, de précipitation,

— des charges semi-renforçantes ou non renforçantes telles que le quartz broyé, la silice de diatomées, le talc, le mica, le carbonate de calcium, l'argile calcineé, les oxydes de magnésium, de titane, de fer, de zinc, d'aluminium, de plomb, de cuivre, les oxydes et hydroxydes de terres rares (tels que l'oxyde cérique, l'hydroxyde cérique), le silicate de zinc, le sulfate de baryum, le métaphosphate de baryum ou de zinc, le borate du plomb, le carbonate de plomb, le borate de zinc, le borate de calcium, le borate de baryum, le silicate d'aluminium,

— des poudres métalliques telles que celles à base de cuivre, de fer, de plomb, d'aluminium, de zinc.

D'autres charges pouvant être utilisées comme le noir de carbone à raison de 0,02 à 1 partie, de préférence 0,15 à 0,9 partie, pour 100 parties de l'huile vinylée (A). La présence d'un noir de carbone, exempt de soufre ou de dérivés soufrés, dans certaines formulations permet d'améliorer assez nettement la résistance à la combustion des mousses. Il est possible dans certains cas de renforcer encore la résistance à la combustion en associant le noir de carbone avec de l'hydroxyde cérique, cet hydroxyde étant alors introduit à raison de 0,005 parties à 4 parties, de préférence 0,01 à 3,5 parties, pour 100 parties de l'huile vinylée A).

Le catalyseur au platine C) est généralement introduit de manière à fournir de 1 à 500 ppm (partie par million), de préférence de 5 à 80 ppm de platine, exprimé en métal, par rapport à l'huile vinylée A).

Ce catalyseur peut être déposé sur des supports inertes tels que le gel de silice, l'alumine, le noir de carbone. De préférence, on utilise un catalyseur non supporté choisi parmi l'acide chloroplatinique, sa forme hexahydraté, ses sels alcalins, ses complexes avec les dérivés organiques.

En particulier, sont recommandés les produits de réactions de l'acide chloroplatinique avec des vinylpolysiloxanes, tels que le divinyl-1,3 tétraméthyldisiloxane, traités ou non avec un agent alcalin pour éliminer partiellement ou totalement les atomes de chlore (brevets américains 3.419.593, 3.775.452 et 3.814.730). Sont recommandés également les produits de réactions de l'acide chloroplatinique avec des alcools, éthers, aldéhydes (brevet américain 3.220.972).

D'autre catalyseurs efficaces comprennent les chélates de platine et les complexes du chlorure platineux avec des phosphines, des oxydes de phosphines, des oléfines comme l'éthylène, le propylène, le styrène (brevet américain 3.159.610, 3.552.327).

L'huile diorganopolysiloxanique A), de viscosité 100 à 300 000 mPa.s à 25°C, de préférence 600 à 200 000 mPa.s à 25°C, est un polymère linéaire, constitué d'une succession de motifs diorganosiloxy bloqués en bout de chaîne par un motif vinyldiorganosiloxy. Les radicaux organiques liés aux atomes de silicium du polymère sont choisis parmi les radicaux méthyle, éthyle, n-propyle, vinyle, phényle, trifluoro-3,3,3 propyle, au moins 60% molaire de ces radicaux sont des radicaux méthyle, au plus 20% molaire sont des radicaux phényle et au plus 2% molaire sont des radicaux vinyle (ne sont pas compris dans ce pourcentage les radicaux vinyle situeés en bout de chaîne).

A titre d'exemples concrets de motifs diorganosiloxy, peuvent être cités ceux de formules:

$$(CH_3)_2SiO,\quad CH_3(CH_2{=}CH)SiO,\quad CH_3(C_6H_5)SiO,\quad (C_6H_5)_2SiO,$$

$$CH_3(n.C_3H_7)SiO,\quad CH_3(C_6H_5)SiO,\quad CF_3CH_2CH_2(CH_3)SiO,$$

De préférence est utilisé une huile diméthylpolysiloxane bloquée à chaque extrémité de sa chaîne par un motif diméthylvinylsiloxy ou un motif méthylphénylvinylsiloxy, de viscosité 600 à 150 000 mPa.s à 25°C.

L'huile est commercialisée par les fabricants de silicones, par ailleurs, sa fabrication peut être réalisée par exemple, en polycondensant et réarrangeant, en présence d'un catalyseur, le produit d'hydrolyse d'un mélange constitué d'un diorganovinylchlorosilane et d'un diorganodichlorosilane. Elle peut être réalisée encore par polymérisation d'un diorganocyclopolysiloxane, tel que l'octaméthylcyclotétrasiloxane, à l'aide d'un catalyseur alcalin ou acide, en présence d'une quantité appropriée d'un bloqueur de chaîne tel que celui de formule:

$$R(CH_2{=}CH)CH_3SiO[Si(CH_3)_2O]_nSiCH_3(CH{=}CH_2)R$$

R étant un radical méthyle ou phényle et n étant un nombre quelconque de 0 à 20.

Après atteinte de l'équilibre de la réaction de polymérisation, on neutralise le catalyseur et élimine pas distillation les composés volatils. On peut utiliser l'huile A) seule ou sous la forme d'un mélange d'huiles A) qui se différencient les unes des autres par la valeur de leur viscosité. On peut également, dans la mesure où les compositions moussantes sont conditionnés en 2 composants, introduire une huile de viscosité relativement faible par exemple 1 000 à 20 000 mPa.s à 25°C dans l'un des 2 composants et une autre de viscosité plus élevée par exemple de 60 000 à 150 000 mPa.s à 25°C dans l'autre composant. Ce processus permet de régler la viscosité des 2 composants.

Jusqu'à 50% en poids du polymère A) peut être remplacé par un produit résineux qui est un copolymère organopolysiloxane choisi parmi ceux constitués sensiblement de motifs triméthylsiloxane, méthylvinylsiloxane et $SiO_2$ dans lequel 2,5 à 10% molaire des atomes de silicium comportent un groupe vinyle et dans lequel le rapport molaire des groupes triméthylsiloxane aux groupes $SiO_2$ est compris entre 0,5 et 1.

De tels copolymères résineux utilisables dans le cadre de la présente invention sont décrits dans les brevets américains US—A—3.284.406 et 3.436.366 cités comme référence.

L'organohydrogénosiloxane B) repondant à la définition donnée ci-dessus, peut être un homopolymère, un copolymère ou leurs mélanges contenant des motifs polysiloxanes de formule:

$$RSiO_{1,5},\quad R_2SiO,\quad R_3SiO_{0,5},\quad SiO_2,$$

$$RHSiO,\quad HSiO_{1,5},\quad RHSiO_{0,5},$$

dans lesquelles le radical organique R a la signification donnée sous B) ci-dessus. Ainsi le produit B) peut être un polymère liquide organohydrogénopolysiloxane ayant au moins 3 groupes SiH par mole et utilisé à raison de 10 à 50 parties, de préférence 15 à 35 parties, pour 100 parties de l'huile vinylée A). Ce polymère répond à la formule moyenne $R_xH_ySiO_{4-x-y/2}$ dans laquelle x est un nombre de 1 à 1,99, de préférence 1,[illegible] à 1,95 et y est un nombre de 0,1 à 1, de préférence de 0,2 à 0,95, la somme x + y représente un nombre de 1,7 à 2,6, de préférence 1,75 à 2,55 et R représente un radical méthyle, éthyle, n-propyle, phényle, au moins 80% des radicaux R sont des radicaux méthyle. La formule ci-avant englobe les polymères B) présentant une structure linéaire, cyclique, ou ramifié.

Un polymère B) de structure linéaire peut répondre à la formule moyenne:

$$R_{(3-t)}H_tSi[OSiR_2]_g[OSiRH]_hOSiH_tR_{(3-t)}$$

dans laquelle:

t est le nombre zéro ou un,

g est un nombre de 0 à 50,

h est un nombre de 3 à 90 et

R a la même signification que celle donnée ci-dessus lors de la description de la formule générale.

De préférence, on utilise un polymère de structure linéaire répondant à la formule moyenne:

$$(CH_3)_3Si[OSi(CH_3)_2]_g[OSi(CH_3)H]_hOSi(CH_3)_3$$

dans laquelle g et h ont la signification ci-avant.

Un polymère B) de structure cyclique peut répondre à la formule moyenne:

$$[OSiRH]_{n1}[OSiG_2]_{n2},$$

dans laquelle

n1 est un nombre de 3 à 10,

n2 est un nombre de zéro à 5 et

G a la même signification que celle donnée précédemment.

De préférence, on obtient un polymère de structure cyclique répondant à la formule $[OSi(CH_3)H]_4$ ou à la formule $[OSi(CH_3)H]_3$.

Un polymère B) de structure ramifiée renferme au moins un motif de formules $RSiO_{1,5}$, $SiO_2$, $HSiO_{1,5}$, les autres motifs étant choisis dans le groupe de ceux de formules:

$$R_3SiO_{0,5},\quad HR_2SiO_{0,5},\quad R_2SiO,\quad H(R)SiO:$$

R ayant toujours la même signification que celle donnée précédemment.

Un polymère ayant une structure ramifiée bien déterminée peut répondre à la formule moyenne:

$$P_wSi[OSiR_2H]_{w'}\quad (OSiR_3)_{w''}]_{4-w}$$

dans laquelle:

R' représente R ou H (R ayant toujours la même signification);

w est le nombre zéro ou un;

w' est le nombre 2, 3 ou 4;

w'' est le nombre zéro ou un;

w' + w'' représente le nombre 3 ou 4; toutefois

lorsque w est zéro, w' est le nombre 3 ou 4;

lorsque w est 1 et R' représente H, w' est le nombre 2 ou 3;

lorsque w est 1 et R' représente R, w' est le nombre 3.

De préférence, on choisit un polymère de structure ramifiée répondant à la formule:

$CH_3Si[OSi(CH_3)_2H]_3$ ou à la formule $Si[OSi(CH_3)_2H]_4$.

D'autres exemples d'organohydrogénopolysiloxane utilisables dans les compositions selon la présente invention sont également décrits dans les brevets américains US—A—3.284.406 et 3.436.366 cités comme référence.

La fabrication des compositions moussantes conformes à l'invention peut avoir lieu par simple mélange des divers constituants A), B), C), D) et E) dans un ordre quelconque d'introduction, à l'aide d'appareillages appropriés. Il est toutefois souhaitable d'ajouter en dernier, le catalyseur au platine C) ou l'organohydrogénopolysiloxane B). Les compositions ainsi formées peuvent se transformer immédiatement en mousses dès la température ambiante ou par chauffage à une température comprise dès la température ambiante ou par chauffage à une température comprise entre la température ambiante et 200°C pendant une durée comprise entre 2 et 30 mn. La température de formation de la mousse dépend en premier lieu de la nature de l'acide organique carboxylique utilisé. Ainsi pour l'acide stéarique un chauffage à 170—180°C est nécessaire pendant environ 10—20 mn.

Les compositions de l'invention peuvent être préparées comme indiqué précédemment, par simple mélange des divers constituants. Certaines de ces compositions se transforment immédiatement en mousse à température ambiante. Dans ce cas pour stabiliser et les conditionner sous forme de compositions monocomposantes, qui présentent "une vie en pot" supérieure à un jour, il est nécessaire d'ajouter un inhibiteur au catalyseur au platine C). De tels inhibiteurs sont bien connus; en particulier on peut citer les amines, les silazanes, les oximes, les diesters de diacides carboxyliques, les alcools acétyléniques, les cétones acétyléniques, les vinylméthylcyclopolysiloxanes (brevets américains 3.445.420 et 3.989.667).

L'inhibiteur est utilisé à raison de 0,005 à 5 parties de préférence 0,01 à 3 parties pour 100 parties de l'huile vinylée A).

Les compositions renfermant un inhibiteur peuvent être stables pendant plusieurs jours à la température ambiante; pour obtenir les mousses au moment désiré, on est obligé de chauffer les compositions au-dessus de 60°C, de préférence au-dessus de 100°C, cependant ce mode opératoire est contraignant aussi dans la majorité des cas on conditionne les compositions conformes à l'invention en 2 ou 3 composants; l'inhibiteur est absent ou bien il est ajouté à faible dose dans le dessein de régler le temps de formation des mousses.

L'un des composants pourra être constitué par exemple d'une fraction des huiles vinylées A), d'une fraction des charges D), de la totalité du catalyseur C) et de l'agent porophore E), ce dernier pouvant faire l'objet, sous la forme d'un empâtage comme indiqué ci-dessus, d'un composant distinct.

L'autre composant pourra être constitué de la fraction restante des huiles vinylées A), de la fraction restante des charges D), de la totalité de l'hydrogénoorganopolysiloxane B).

On s'arrange en jouant sur les quantités mises en jeu des divers constituants et sur la viscosité des polymères pour préparer 2 composants dont les viscosités ne sont pas très élevées par exemple au plus 20 000 mPa.s à 25°C.

Il est possible d'arriver en fonction des quantités utilisées et du nombre et de la nature des constituants, entrant dans chacun des 2 ou 3 composants, à un grand nombre de solutions pour le conditionnement en 2 ou 3 composants. Il est recommandé cependant de mettre dans l'un des composants, la totalité du catalyseur au platine C), et dans l'autre la totalité du polymère hydrogénoorganopolysiloxanique B).

Les mousses issues des compositions conformes à l'invention sont utilisables dans les domaines d'application les plus variés compte-tenu notamment de sa bonne résistance à la flamme.

Dans les centrales nucléaires on ménage des trous dans les murs ou les plafonds pour le passage des câbles éléctriques; après la pose des câbles, il reste un volume vide, à l'endroit des zones de passage, qu'il est nécessaire de combler; les compositions de l'invention conviennent pour cet usage.

Elles conviennent également pour le remplissage à l'intérieur des bâtiments, des espaces vides situés par exemple dans des montées de câbles, de canalisations, dans les faux-plafonds.

Elles conviennent pour le bouchage des trous et fissures apparaissant dans les constructions en béton et en maçonnerie dans les pistes dallées. Elles conviennent enfin dans les domaines d'application utilisant des matériaux souples, légers, résistants à la flamme et au vieillissement, tels que la protection des composants électroniques, la fabrication de tampons, et plus particulièrement de coussins pour sièges de passagers dans les moyens de transport (véhicule automobile, train, métro etc. . . . .).

Exemple 1

On utilise pour fabriquer des mousses deux composants X et Y que l'on mélange dans le rapport pondéral 1/1 au moment de l'emploi, puis on ajoute l'empâtage porophore Z. Ces ceux composants sont formés à partir des constituants choisis dans le groupe ci-après:

$A_1$ — huile diméthylpolysiloxane vinylée de viscosité 100 000 mPa.s à 25°C, bloquée à chaque extrémité de sa chaîne par un motif vinyldiméthylsiloxy.

$A_2$ — huile diméthylpolysiloxane de viscosité 3 500 mPa.s à 25°C, bloquée à chaque extrémité de sa chaîne par un motif triméthylsiloxy.

$A_3$ — résine silicone en solution dans le xylène comportant 40% molaire de motif:

$(CH_3)SiO_{0,5}$, 6% molaire de motifs $(CH_2)(CH_2{=}CH)SiO$ et 53,5% molaire de $SiO_2$.

$B_1$ — résine silicone liquide hydrogénée préparée par hydrolyse de silicate technique $Si(OC_2H_5)_4$ et de $(CH_3)_2HSiCl$ en des quantités correspondant à 1 mole de $SiO_2$ pour 2 moles de $M_2HSiCl$ en solution dans le toluène. Cette résine présente donc un rapport molaire théorique de motifs $(CH_3)HSiO_{0,5}/SiO_2 = 2$ et un rapport molaire réel de 2,23.

$C_1$ — une solution catalytique renfermant 0,25% de platine métal; cette solution est préparée par agitation, à la température ambiante, d'un mélange comprenant 0,6 partie d'acide chloroplatine, 10 parties d'isopropanol; 55 parties de xylène, 6 parties de tétraméthyl-1,1,3,3 divinyl-1,3 disiloxane.

$D_1$ — du quartz broyé de diamètre particulaire moyen 5 µm et de surface spécifique d'environ 1,7 $m^2$/g.

E — additif porophore.

$(E')_1$ — carbonate de calcium de précipitation de granulométrie moyenne de 0,2 µm.

$(E')_2$ — carbonate de calcium naturel broyé (granulométrie entre 3 et 10 micromètres).

$(E')_3$ — carbonate de calcium naturel préalablement traité par de l'acide stéarique pour être hydrophobe (granulométrie entre 3 et 10 µm).

$(E'')_1$ — acide acétique.

$(E'')_2$ — acide stéarique.

$(E'')_3$ — acide oléique.

$(E'')_4$ — acide adipique.

$(E'')_5$ — acide versatique(R)10 acide synthétique composé d'un mélange d'acides carboxyliques tertiaires saturés ayant au total 10 atomes de carbone.

F — huile silicone pour disperser l'acide (E'').

$F_1$ — identique à $A_2$.

$F_2$ — huile diméthypolysiloxane bloqué a chaque extrémité par un motif triméthylsiloxy et de viscosité 100 mPa.s à 25°C.

En ce qui concerne la préparation des mousses et leurs caractéristiques physiques on note:

— la teneur en agent porophore en % par rapport au poids de composition organopolysiloxane.

— les teneurs en parties en poids des trois constituants (E') (E'') et F de l'empâtage contenant l'agent porophore.

— la durée et la température de réticulation.

— la masse volumique des mousses obtenues étant entendu que la composition des cellules a une masse volumique de 1 250 kg/$m^3$.

— la durée en pot ou "pot life" de la composition après mélange de tous ses constituants.

— l'aspect des cellules (des pores) de la mousse et/ou le diamètre moyen des cellules (des pores).

Preparation de la Composition

1°) Préparation du composant X:

On mélange dans un malaxeur:

— $A_1$: 500 parties.

— $A_3$ (calculé en poids d'extrait sec): 150 parties.

— $D_1$ (calculé en poids d'extrait sec): 350 parties.

— $C_1$: catalyseur à la dose de 40 ppm calculés en poids de platine.

2°) Préparation du composant Y:

On mélange dans un malaxeur:

— $A_1$: 480 parties.

— $A_3$ (calculé en poids d'extrait sec): 160 parties.

— $D_1$: 315 parties.

— $B_1$: 45 parties.

3°) Préparation du composant Z:

— $F_2$: 400 parties.

— $(E'')_1$: 100 parties.

— $(E')_1$: 500 parties.

$(E'')_1$ en poudre est mis en dispersion dans $F_2$ puis $(E')_1$ est introduit dans la dispersion sous agitation intense (50 tours/mn) pendant 1 heure. Le produit pâteux est alors broyé à l'aide d'un broyeur à trois cylindres. On mélange 50 parties de X à 50 parties de Y et on ajoute (en % en poids par rapport au poids de X + Z) le composant Z.

Exemple 2 à 9 et Exemples comparatifs 10 et 11

On prépare les compositions de ces exemples en suivant le mode opératoire de l'exemple 1. La nature et la teneur des différents constituants sont rassemblés dans le tableau I ci-après. L'appréciation qualitative et quantitative des mousses obtenues sont rassemblées dans le tableau II ci-après. Dans les exemples comparatifs 10 et 11 on a utilisé respectivement comme agent porophore Z du POROFOR K (ADC)(R) commercialisé par BOEHRINGER (Ingelheim).

Ces exemples comparatifs montrent que l'on obtient une mousse dont les pores sont irréguliers avec de plus, un durée de vie en pot insuffissante.

TABLEAU I

| Constituants | | EX. 1 | 2 | 3 | 4 | 5 | 6 | 7 | 8 | 9 | 10 | 11 |
|---|---|---|---|---|---|---|---|---|---|---|---|---|
| X | $A_1$ | 500 | 500 | 500 | 500 | 500 | 500 | 500 | 500 | 500 | 500 | 500 |
| | $A_2$ | - | - | - | - | - | - | - | - | - | - | - |
| | $A_3$ | 150 | 150 | 150 | 150 | 150 | 150 | 150 | 150 | 150 | 150 | 150 |
| | $B_1$ | - | - | - | - | - | - | - | - | - | - | - |
| | $C_1$ * | 20 | 20 | 20 | 20 | 20 | 20 | 20 | 20 | 20 | 20 | 20 |
| | $D_1$ | 350 | 350 | 350 | 350 | 350 | 350 | 350 | 350 | 350 | 350 | 350 |
| Y | $A_1$ | 480 | 480 | 480 | 480 | 480 | 480 | 480 | 480 | 480 | 480 | 480 |
| | $A_2$ | - | - | - | - | - | - | - | - | - | - | - |
| | $A_3$ | 160 | 160 | 160 | 160 | 160 | 160 | 160 | 160 | 160 | 160 | 160 |
| | $B_1$ | 45 | 45 | 45 | 45 | 45 | 45 | 45 | 45 | 45 | 45 | 45 |
| | $D_1$ | 315 | 315 | 315 | 315 | 315 | 315 | 315 | 315 | 315 | 315 | 315 |
| Z | $(E')_1$ | 500 | 500 | 500 | 340 | 340 | 340 | 340 | - | - | - | - |
| | $(E')_2$ | - | - | - | - | - | - | - | 340 | - | - | - |
| | $(E')_3$ | - | - | - | - | - | - | - | - | 340 | - | - |
| | $E''_1$ | 100 | - | - | - | - | - | - | - | - | - | - |
| | $E''_2$ | - | 100 | 100 | 120 | - | - | - | - | - | - | - |
| | $E''_3$ | - | - | - | - | 120 | - | - | 120 | 120 | - | - |
| | $E''_4$ | - | - | - | - | - | 120 | - | - | - | - | - |
| | $E''_5$ | - | - | - | - | - | | 120 | - | - | - | - |
| | $F_1$ | - | - | - | 540 | 540 | 540 | 540 | 540 | 540 | - | - |
| | $F_2$ | 400 | 400 | 400 | - | - | - | - | - | - | - | - |
| Z** | | 2 | 6 | 6 | 6 | 6 | 6 | 6 | 5 | 5 | 4 | 4 |

* : en ppm par rapport à X

** : en % en poids par rapport au poids de X + Y

TABLEAU II

| EX. | RETICULATION durée (mn) | RETICULATION temp. °C | PORES Aspect | PORES diamètre moyen (mm) | masse volumique ($kg/m^3$) de la mousse | Durée de vie en pot en jours et en heures |
|---|---|---|---|---|---|---|
| 1 | 10 | 175 | régulier | 0,6 | 1 000 | > 8 jours |
| 2 | 10 | 175 | très régulier | 0,3 | 1 000 | > 8 jours |
| 3 | 10 | 175 | très régulier | 0,3 | 900 | > 8 jours |
| 4 | 15 | 180 | très régulier | 0,2 | 750 | > 8 jours |
| 5 | 15 | 150 | très régulier | 0,4 | 620 | > 8 jours |
| 6 | 15 | 150 | moyen | 0,1 | 710 | > 8 jours |
| 7 | 15 | 150 | régulier | 0,7 | 500 | > 8 jours |
| 8 | 10 | 175 | régulier | 0,3 | 630 | > 8 jours |
| 9 | 10 | 175 | régulier | 0,4 | 630 | > 8 jours |
| 10 | 10 | 175 | irrégulier | 0,1 | 1 200 | 24 heures |
| 11 | 10 | 175 | irrégulier | 0,1 | 1 200 | 24 heures |

**Revendications**

1. Composition organopolysiloxane transformable en mousse caractérisée en ce qu'elle comporte:

A) 100 parties d'au moins une huile diorganopolysiloxane bloquée à chaque extrémité de sa chaîne par un motif vinyldiorganosiloxy dont les radicaux organiques liés aux atomes de silicium sont choisis parmi les radicaux méthyle, éthyle, n-propyle, vinyle, phényle et trifluoro-3,3,3 propyle, de viscosité de 100 à 300 000 mPa.s à 25°C.

B) au moins un organohydrogénopolysiloxane choisi parmi les homopolymères et les copolymères huileux et résineux liquides, présentant au moins trois groupes SiH par molécule et un seul atome d'hydrogène relié à un même atome de silicium, les radicaux organiques liés aux atomes de silicium étant choisis parmi les radicaux méthyle, éthyle, n-propyle, phényle et trifluoro-3,3,3 propyle, les produits B étant utilisés en quantité telle que le rapport molaire SiH/sivinyle soit compris entre 0,8 et 8 de préférence entre 1,1 et 4.

C) Une quantité catalytiquement efficace d'un catalyseur au platine.

D) 0 à 200 parties d'une charge minérale et/ou métallique de préférence 30 à 80 parties.

E) une quantité d'additif porophore efficace pour engendrer des pores qui est un mélange de carbonate de calcium et d'au moins un acide organique carboxylique.

2. Composition selon la revendication 1, caractérisé en ce que l'acide organique carboxylique est choisi parmi les acides mono- et polycarboxyliques en $C_1$—$C_{25}$ linéaires ou ramifiés, saturés ou à insaturation alcényle ou alcynyle.

3. Composition selon la revendication 1, caractérisé en ce que l'acide organique carboxylique est choisi parmi les acides carbocycliques ayant au maximum 25 atomes de carbones.

4. Composition selon l'une quelconque des revendications précédentes, caractérisée en ce que l'acide carboxylique est sous la forme d'une dispersion dans une huile silicone non réactive vis à vis dudit acide.

5. Composition selon la revendications 4, caractérisée en ce que l'huile silicone non réactive est choisie parmi les organopolysiloxane A) présentant une viscosité comprise entre 10 et 4 000 mPa.s à 25°C et les diorganopolysiloxane de même viscosité dont les radicaux organiques sont choisis parmi les radicaux méthyle, éthyle, phényle et trifluoro-3,3,3 propyle, au moins 70% molaire de ces radicaux étant des radicaux méthyle et au plus 15% molaire étant des radicaux phényle.

6. Composition selon l'une quelconque des revendications précédentes caractérisé en ce que l'additif porophore d'une part comporte de 1 à 70 parties, de préférence de 5 à 30 parties d'acide carboxylique pour 100 parties de carbonate de calcium.

7. Composition selon l'une des revendications 4 à 6, caractérisé en ce que le carbonate de calcium est sous la forme d'un empâtage dans la dispersion de l'acide carboxylique organique dans l'huile silicone.

8. Composition selon la revendication 7, caractérisée en ce qu'elle comporte pour 100 parties de compositions, de 0,5 à 50 parties, de préférence de 2 à 20 parties d'empâtage.

9. Composition selon l'une quelconque des revendications précédentes, caractérisée en ce jusqu'à 50% en poids du polymère A) est remplacé par un produit résineux qui est un copolymère organopolysiloxane choisi parmi ceux constitués de motifs triméthylsiloxane, méthylvinylsiloxane et $SiO_2$ dans lequel 2,5 à 10% molaire des atomes de silicium comportent un groupe vinyle et dans lequel le rapport molaire des groupes triméthylsiloxane au groupe $SiO_2$ est compris entre 0,5 et 1.

10. Mousse en silicone provenant de la réticulation d'une composition telle que définie à l'une quelconque des revendications 1 à 9.

## Patentansprüche

1. In Schaum überführbare Organopolysiloxan-Zusammensetzung, dadurch gekennzeichnet, daß sie enthält:

A) 100 Teile mindestens eines Diorganopolysiloxanöls, das an jedem Kettenende durch eine Vinyldiorganosiloxygruppe blockiert ist, deren organische Reste, die an die Siliciumatome gebunden sind, ausgewählt sind unter den Methyl-, Ethyl-, n-Propyl-, Vinyl-, Phenyl- und 3,3,3-Trifluorpropylresten mit einer Viscosität von 100 bis 300 000 mPa.s bei 25°C,

B) mindestens ein Organohydrogenpolysiloxan, ausgewählt unter den öligen und flüssigen, harzigen Homopolymeren und Copolymeren, das mindestens drei SiH-Gruppen pro Molekül und ein einziges Wasserstoffatom gebunden an dasselbe Siliciumatom aufweist, wobei die an die Siliciumatome gebundenen organischen Reste ausgewählt sind unter den Methyl-, Ethyl-, n-Propyl-, Phenyl- und 3,3,3-Trifluorpropylresten, und die Produkte B in solcher Menge verwendet werden, daß das Molverhältnis SiH/Si-Vinyl zwischen 0,8 und 8, vorzugsweise zwischen 1,1 und 4 beträgt;

C) eine katalytisch wirksame Menge eines Platinkatalysators,

D) 0 bis 200 Teile eines mineralischen und/oder metallischen Füllstoffs, vorzugsweise 30 bis 80 Teile,

E) eine für die Bildung von Poren wirksame Menge an porophorem Zusatz, was ein Gemisch von Calciumcarbonat und mindestens einer organischen Carbonsäure ist.

2. Zusammensetzung gemäß Anspruch 1 dadurch gekennzeichnet, daß die organische Carbonsäure ausgewählt ist unter den linearen oder verzweigten, gesättigten oder mit Alkenyl- oder Alkinyl-Unsättigung, $C_1$—$C_{25}$-Mono- und Polycarbonsäuren.

3. Zusammensetzung gemäß Anspruch 1, dadurch gekennzeichnet, daß die organische Carbonsäure ausgewählt ist unter den carbocyclischen Säuren mit maximal 25 Kohlenstoffatomen.

4. Zusammensetzung gemäß einem der vorhergehenden Ansprüche, dadurch gekennzeichnet, daß die Carbonsäure in Form einer Dispersion in einem gegenüber dieser Säure nicht reaktiven Siliconöl vorliegt.

5. Zusammensetzung gemäß Anspruch 4, dadurch gekennzeichnet, daß das nicht reaktive Siliconöl ausgewählt ist unter den Organopolysiloxanen A mit einer Viscosität zwischen 10 und 4000 mPa.s bei 25°C und den Diorganopolysiloxanen der gleichen Viscosität, deren organische Reste ausgewählt sind unter den Methyl-, Ethyl-, Phenyl- und 3,3,3-Trifluorpropylresten, wobei mindestens 70 Molprozent dieser Reste Methylreste und höchstens 15 Molprozent Phenylreste sind.

6. Zusammensetzung gemäß einem der vorhergehenden Ansprüche, dadurch gekennzeichnet, daß das porophore Additiv einerseits 1 bis 70 Teile, vorzugsweise 5 bis 30 Teile Carbonsäure pro 100 Teile Calciumcarbonat enthält.

7. Zusammensetzung gemäß einem der Ansprüche 4 bis 6, dadurch gekennzeichnet, daß das

Calciumcarbonat in Form einer Anteigung in der Dispersion der organischen Carbonsäure in dem Siliconöl vorliegt.

8. Zusammensetzung gemäß Anspruch 7, dadurch gekennzeichnet, daß sie pro 100 Teile Zusammensetzung 0,5 bis 50 Teile, vorzugsweise 2 bis 20 Teile Anteigung enthält.

9. Zusammensetzung gemäß einem der vorhergehenden Ansprüche, dadurch gekennzeichnet, daß bis zu 50 Gewichtsprozent des Polymeren A ersetzt wird durch eine harziges Produkt, welches ein Organopolysiloxan-Copolymeres ist, ausgewählt unter denjenigen, die aus Trimethylsiloxan-, Methylvinylsiloxan-Gruppen und $SiO_2$ bestehen, worin 2,5 bis 10 Molprozent der Siliciumatome eine Vinylgruppe enthalten und worin das Molverhältnis der Trimethylsiloxangruppen zur $SiO_2$-Gruppe zwischen 0,5 und 1 liegt.

10. Siliconschaum stammend von der Vernetzung einer Zusammensetzung, wie sie in einem der Ansprüche 1 bis 9 definiert ist.

**Claims**

1. Organopolysiloxane composition convertible into foam, characterized in that it contains:

A) 100 parts of at least one diorganopolysiloxane oil blocked at each end of its chain by a vinyldiorganosiloxy unit, whose organic radicals linked to the silicon atoms are selected from methyl, ethyl, n-propyl, vinyl, phenyl and 3,3,3-trifluoropropyl radicals, and having a viscosity from 100 to 300,000 mPa.s at 25°C;

B) at least one organohydrogenopolysiloxane selected from oily and liquid resinous homopolymers and copolymers having at least three SiH groups per molecule and only one hydrogen atom linked to one and the same silicon atom, the organic radicals linked to the silicon atoms being selected from methyl, ethyl, n-propyl, phenyl and 3,3,3-trifluoropropyl radicals, the products B being used in such quantity that the SiH/Si-vinyl molar ratio is between 0.8 and 8, preferably between 1.1 and 4;

C) a catalytically effective quantity of a platinum catalyst;

D) 0 to 200 parts of a mineral and/or metallic filler, preferably 30 to 80 parts; and

E) a quantity of blowing additive, which is effective for creating pores and which is a mixture of calcium carbonate and at least one organic carboxylic acid.

2. Composition according to Claim 1, characterized in that the organic carboxylic acid is selected from linear or branched, saturated or alkenyl- or alkynyl-unsaturated $C_1$—$C_{25}$-mono- and poly-carboxylic acids.

3. Composition according to Claim 1, characterized in that the organic carboxylic acid is selected from carbocyclic acids having at most 25 carbon atoms.

4. Composition according to one of the preceding claims, characterized in that the carboxylic acid is in the form of a dispersion in a silicone oil which does not react with the said acid.

5. Composition according to Claim 4, characterized in that the unreactive silicone oil is selected from the organopolysiloxanes A) having a viscosity between 10 and 4,000 mPa.s at 25°C and the diorganopolysiloxanes of the same viscosity, whose organic radicals are selected from methyl, ethyl, phenyl and 3,3,3-trifluoropropyl radicals, at least 70 mol% of these radicals being methyl radicals and at most 15 mol% being phenyl radicals.

6. Composition according to any of the preceding claims, characterized in that the blowing additive in turn contains 1 to 70 parts, preferably 5 to 30 parts, of a carboxylic acid per 100 parts of calcium carbonate.

7. Composition according to one of Claims 4 to 6, characterized in that the calcium carbonate is in the form of a paste in the dispersion of the organic carboxylic acid in the silicone oil.

8. A composition according to Claim 7, characterized in that it contains 0.5 to 50 parts, preferably 2 to 20 parts, of paste per 100 parts of composition.

9. Composition according to any of the preceding claims, characterized in that up to 50% by weight of the polymer A) is replaced by a resinous product which is an organopolysiloxane copolymer selected from those consisting of trimethylsiloxane, methylvinylsiloxane and $SiO_2$ units, in which 2.5 to 10 mol% of the silicon atoms carry a vinyl group and in which the molar ratio of the trimethylsiloxane groups to the $SiO_2$ group is between 0.5 and 1.

10. Silicone foam obtained by crosslinking a composition as defined in any of Claims 1 to 9.